Europäisches Patentamt

European Patent Office

Office européen des brevets

(11) Veröffentlichungsnummer: **0 249 910**
**B1**

(12) **EUROPÄISCHE PATENTSCHRIFT**

(45) Veröffentlichungstag der Patentschrift:
25.04.90

(21) Anmeldenummer: 87108542.9

(22) Anmeldetag: 12.06.87

(51) Int. Cl.⁴: **B60R 22/20**

(54) **Höhenverstellbare Befestigungsvorrichtung für einen Umlenk- oder Befestigungsbeschlag.**

(30) Priorität: 16.06.86 DE 3620202
04.09.86 DE 3630118
12.03.87 DE 3707956

(43) Veröffentlichungstag der Anmeldung:
23.12.87 Patentblatt 87/52

(45) Bekanntmachung des Hinweises auf die Patenterteilung:
25.04.90 Patentblatt 90/17

(84) Benannte Vertragsstaaten:
DE ES FR GB IT SE

(56) Entgegenhaltungen:
EP-A- 0 150 065
DE-A- 3 151 019
DE-A- 3 516 059
GB-A- 2 098 853

(73) Patentinhaber: **Autoflug GmbH & Co Fahrzeugtechnik,
Industriestrasse 10 Postfach 1180,
D-2084 Rellingen 2(DE)**

(72) Erfinder: **Harenberg, Holger, Holstenstrasse 12,
D-2084 Rellingen 1(DE)**
Erfinder: **Kock, Hans-Otto, Dipl.-Ing., Oersdorfer
Stieg 13, D-2358 Kaltenkirchen(DE)**

(74) Vertreter: **Müller, Karl-Ernst, Dr. et al, Patentanwälte
Becker, Müller & Pust Eisenhüttenstrasse 2,
D-4030 Ratingen 1(DE)**

ACTORUM AG

## Beschreibung

Die Erfindung betrifft eine Vorrichtung zur Höhenverstellung des oberen Umlenk- oder Befestigungsbeschlages für den Schultergurt eines Sicherheitsgurtsystems insbesondere in Kraftfahrzeugen, bestehend aus einer an einem Fahrzeugaufbauteil (Karosserie) angebrachten Riegelvorrichtung mit einer Führungsschiene und mit darin angeordneten Rastausnehmungen, in welche ein zugeordnetes Raststück einer Rasteinrichtung eingreift, welches in einem Führungsschienenprofil längsbeweglichen und mit einer Handhabe gekoppelten Gleitstück schwenkbeweglich zwischen einer Rast- und einer Verschiebestellung gelagert ist.

Eine Vorrichtung der vorstehend benannten Gattung ist aus des DE-OS 35 16 059 bekannt, bei welcher in dem Gleitstück als Träger des Beschlages ein in Richtung auf den Boden der Führungsschiene federbelastetes Sperrstück zwischen einer Freigabe- und einer Verriegelungsstellung schwenkbeweglich angeordnet ist. Bei einer derartigen, lediglich aufgrund der Wirkung einer Verriegelungsfeder eintretenden Verrastung des Sperrgliedes mit den zugeordneten Ausnehmungen der Führungsschiene ist es nicht auszuschließen, daß es bei der Betätigung der Höhenverstellung zu einer Zwischenlage des Raststückes zwischen zwei Ausnehmungen der Führungsschiene kommt, wobei das Gleitstück durch die wirkenden Reibungskräfte in seiner Position gehalten und die eingetretene Fehlverriegelung somit für den Benutzer nicht erkennbar ist. Kommt es jedoch nun im Gefahrenfall zu einer nach unten gerichteten Zugkraft auf das Gleitstück, indem der zugeordnete Schultergurt am Beschlag zieht, so besteht die Möglichkeit, daß die Abwärtsbewegung des Gleitstückes mit einer solchen Beschleunigung eingeleitet wird, daß die Kraft der auf das Raststück einwirkenden Verriegelungsfeder nicht ausreicht, unter Last die Verriegelung herbeizuführen. So kann der Beschlag sich in der Führungsschiene abwärts bewegen und somit eine derartige Länge an Gurtband auf den Körper der angeschnallten Person zu freigeben, daß deren Gefährdung nicht auszuschließen ist.

Der Erfindung liegt daher die Aufgabe zugrunde, einen gattungsgemäßen Gegenstand derart zu verbessern, daß bei Verstellung des Beschlages eine sichere Verriegelung in jeder zugeordneten Rastausnehmung der Führungsschiene herbeigeführt wird.

Die Lösung dieser Aufgabe ergibt sich einschließlich vorteilhafter ausgestaltungen und Weiterbildungen aus dem Inhalt der Patentansprüche, welche dieser Beschreibung nachgestellt sind.

Aus der DE-OS 31 51 019 ist bereits eine Höhenverstellvorrichtung bekannt, bei welcher ein vergleichbares Problem dadurch gelöst ist, daß die Abmessungen von beiderseits des Führungsschlitzes in der Führungsschiene ausgebildeten Rastausnehmungen sowie von zwei an einem Gleitstück seitlich federbelastet beweglichen Sperrelementen so ausgewählt bestimmt sind, daß sich in jeder möglichen Höhenlage des Gleitstückes in der Führungsschiene jeweils mindestens eines der beiden Sperrelemente in Eingriff mit der Rastausnehmung befindet. Da zur Durchführung dieser Lösung die Sperrelemente mit beträchtlichem Spiel in Bewegungsrichtung des Beschlages in den Rastausnehmungen gehalten sind, besteht hier der Nachteil, daß es im Gefahrenfall zu einer schlagartigen Belastung der Sperrelemente kommen kann.

Mit der Erfindung ist der Vorteil verbunden, daß die Verriegelung des Raststückes mit der Führungsschiene nicht mehr von einer Federkraft abhängig ist, sondern durch zwangsweisen Formschluß herbeigeführt wird, indem das Raststück bei der kritischen Abwärtsbewegung des Beschlages durch eine Steuerkurve in jede Verrastungsposition vollständig eingesteuert wird. Somit ist bei Abwärtsbewegung des Beschlages nur eine Verstellung von Rastposition zu Rastposition möglich.

Durch das Fehlen einer Verriegelungsfeder ist jedoch auch die Bedienung der Höhenverstellvorrichtung in vorteilhafter Weise erleichtert, weil bei der Entriegelung des Beschlages die Kraft einer Verriegelungsfeder nicht mehr überwunden werden muß; vielmehr sind nur noch die Federkräfte zu überwinden, welche mit dem Betätigungsmechanismus der Handhabe wirkungsmäßig zusammenhängen, wobei diese zugehörigen Federn nicht so stark ausgebildet sein müssen, wie die für die sichere Rückhaltung verantwortliche Verriegelungsfeder.

Ein weiteres vorteilhaftes Ausführungsbeispiel ist darauf gerichtet, eine Zwangssteuerung auch für Höhenverstellvorrichtungen vorzuschlagen, deren Rastungen am Boden der Führungsschiene ausgebildet sind, wobei gleichzeitig der Betätigungsmechanismus zur Verschwenkung des Raststückes vereinfacht ist. Bei diesem Ausführungsbeispiel ist im wesentlichen vorgesehen, daß das mit den im Boden der Führungsschiene ausgeprägten Rastvorsprüngen zusammenwirkende Raststück über einen an der Handhabe abgestützten Betätigungshebel schwenkbar ist, dessen Bewegung durch eine Relativbewegung zwischen Gleitstück und daran angeordnetem Raststück und Handhabe gesteuert wird.

Mit einem dritten Ausführungsbeispiel der Erfindung ist über die vorstehend benannten Wirkungen hinaus noch der Vorteil verbunden, daß aufgrund der an sich vorgesehenen Abstützung des Betätigungsorgans an der Führungsschiene die vom Betätigungsorgan ausgehende Kraft nicht die an der Raststelle herrschende Last vergrößert, sondern im Gegenteil die Riegellast entlastend sich an der Oberfläche der Riegel- bzw. Führungsschiene abstützt, so daß das Raststück ohne nennenswerte Reibung von der zugeordneten Raste freikommt. In den Fällen eines hinterschnittartigen Eingriffs des Raststückes in die Rasten führt die Abstützung der Handhabe auf der Führungsschiene aufgrund der von einander beanstandeten Abstützung der Handhabe einerseits und deren Verbindung mit dem Riegel andererseits und des so gebildeten Hebelarms ein Anheben des Raststückes bzw. des Gleitstückes herbei, so daß das Raststück aus den Raststellen der Führungsschiene leicht freikommt. Hierbei weist die Handhabe jeweils seitliche Nasen auf, die sich auf der Oberfläche der Führungsschiene abstützen und den Drehpunkt für die Verschwenkung des Betätigungsorgans bilden.

Um bei Betätigung der Handhabe in einer Zwischenstellung des Raststückes mit Abstützung auf der Führungsschiene zu verhindern, daß das Raststück gegen die Steuerkurve für die Zwangssteuerung gepreßt und die Bauteile gegenseitig bis zur Selbstblockage verklemmt werden, ist vorgesehen, die Handhabe in den Zwischenstellungen außer Funktion zu setzen, so daß das Sperrstück in der Führungsschiene frei in die nächste Raste einrasten kann, ohne daß das Raststück hierbei etwa durch eine Handhabung der Handhabe in einer Entriegelungsstellung verharren könnte.

Hierzu sieht die Erfindung vor, die erforderliche Abstützung der Handhabe nur im Bereich der Raststellen der Führungsschiene dadurch möglich zu machen, daß die Abstützungsnasen mit solchem Abstand zur Oberfläche der Führungsschiene angeordnet sind, daß es im Bereich zwischen den Raststellen auch bei Verschwenkung der Handhabe zu einer Abstützung nicht kommen kann, wobei ein an dem Gleitstück vorgesehener Anschlag die diesbezügliche Verschwenkbewegung der Handhabe begrenzt; ausschließlich in den den Raststellen der Führungsschiene gegenüberliegend auf der Oberfläche der Führungsschiene angeordneten Erhebungen finden die Nasen der Handhabe nunmehr ein Widerlager, so daß die Entriegelung des Höhenverstellers nur an diesen Stellen bewirkt werden kann.

In der Zeichnung sind mehrere Ausführungsbeispiele der Erfindung wiedergegeben, welche nachstehend beschrieben sind. Es zeigen:

Fig. 1 einen Längsschnitt durch die Höhenverstellvorrichtung in Verriegelungsposition,

Fig. 2 die Darstellung gemäß Figur 1 bei entriegeltem Sperrstück, jedoch vor der Verschiebung des Gleitstückes,

Fig. 3 eine Vorderansicht der Höhenverstellung,

Fig. 4 eine Aufsicht auf den Schnitt IV - IV in Figur 3,

Fig. 5 ein anderes Ausführungsbeispiel der Höhenverstellvorrichtung in einem Längsschnitt in Verriegelungsposition,

Fig. 6 die Darstellung gemäß Figur 5 bei vollständig entriegeltem Sperrstück,

Fig. 7 die Darstellung gemäß den Figuren 5 und 6 kurz vor Erreichen der nächsten Rastposition des Sperrstückes,

Fig. 8 eine Draufsicht auf den Gegenstand gemäß Figur 5,

Fig. 9 ein weiteres Ausführungsbeispiel des Höhenverstellers in verriegelter Stellung in einer geschnittenen Seitenansicht,

Fig. 10 den Gegenstand der Figur 9 in einer entriegelten Zwischenstellung,

Fig. 11 ein weiteres Ausführungsbeispiel in Entriegelungsposition,

Fig. 12 den Gegenstand der Figur 11 in Verriegelungstellung.

Die Höhenverstellvorrichtung besteht aus einer einseitig geschlitzten C-förmigen Führungsschiene 10, welche über nicht dargestellte Befestigungselemente an einem Fahrzeugazufbauteil (Karosserie) befestigbar ist. In den beiderseites eines Führungsschlitzes 11 angeordneten Abschnitten sind den zugehörigen Eckbereich durchgreifend Ausnehmungen 12 angeordnet, zwischen denen in Längsrichtung der Führungsschiene 10 Abschnitte 13 verbleiben. In der Führungsschiene 10 ist ein deren Profil angepaßtes Gleitstück 14 längsverschieblich angeordnet, in welchem ein Raststück 15 schwenkbeweglich gelagert ist, indem dieses mit seinem unteren Ende mit einem Stützansatz 16 in eine Lasche 17 des Gleitstückes 14 eingreift. Mit dem um die Lagerung 16, 17 schwenkbaren Raststück 15 ist ein nicht dargestellter Umlenk- oder Befestigungsschlag mittels einer im Raststück verankerten Schraube 18 verbunden.

Das Raststück 15 weist in symmetrischer Ausbildung an seiner Oberseite zwei Verriegelungsvorsprünge 19 auf, die zum Eingriff in die einander gegenüberliegenden Ausnehmungen 12 der Führungsschiene 10 eingerichtet sind. Die Verriegelungsvorsprünge 19 treten von ihrer unteren Vorderkante nach innen in die Führungsschiene 10 über Schrägen 20 ein, welche mit den zugeordneten Unterkanten der Abschnitte 13 der Führungsschiene 10 zusammenwirken.

In den bodenseitigen Ecken der Führungsschiene 10 ist jeweils eine Steuerkurve 21 mit einer Abfolge von Erhebungen 22, Einsenkungen 23 und dazwischen verlaufenden schrägen Verbindungsbahnen 24 angeordnet, die mit je einem an der Steuerkurve 21 zugekehrten Unterseite Des Raststücks 15 angebrachten Nocken 25 zusammenwirken. Die Einsenkungen 23 der Steuerkurven 21 sind dabei im Verhältnis zu den Ausnehmungen 12 der Führungsschiene 10 derart angeordnet, daß bei verriegeltem Raststück 15 der zugehörige Nocken 25 über der Einsenkung 23 gelegen ist. Hingegen sind die Erhebungen 22 im Abstand von einer Nockenlängserstreckung vor dem Verriegelungsaufstand in Form der oberen Endkante des zugeordneten Abschnittes 13 angeordnet.

Zur Betätigung der Höhenverstellung ist eine Handhabe 26 außen auf der Führungsschiene 10 aufgesetzt, die mit einer den Führungsschlitz 11 abdeckenden Verlängerung 27 bis an die untere Begrenzung des Gleitstückes 14 reicht. Im oberen Teil der Handhabe 26 ist ein in die Führungsschiene 10 hineinreichender und mit dem oberen freien Ende das Raststückes 15 zusammenwirkender Entriegelungshebel 28 bei 29 derart gelagert, daß das freie Ende des Entriegelungshebels 28 gegen die Wirkung einer Zugfeder 30 um den Drehpunkt 29 schwenkbar ist. Das freie Ende des Entriegelungshebels 28 ist in etwa V-förmig ausgebildet, mit einem verlängerten Riegelschenkel 31 und einer abgesetzten Haltenase 32, und wirkt mit dem Ende des Raststücks 15 derart zusammen, daß das Raststückende zwischen Riegelschenkel 31 und Haltenase 32 in dem V-Ausschnitt beweglich ist.

Zur Schocksicherung des Raststückes 15 weist die Handhabe 26 eine Sperrlasche 33 auf, vor der in Verriegelungsposition des Raststücks 15 ein an dessen Unterseite angeordneter Sperransatz 34 liegt, wobei oberhalb und unterhalb der Sperrlasche 33 an der Handhabe 26 Freiräume zur Aufnahme des Sperransatzes 34 gegeben sind.

Zusätzlich zum Entriegelungsmechanismus 26, 28 ist noch eine Vorrichtung zum Herbeiführen der Verschiebung des Gleitstückes 14 mit Raststück 15 vorgesehen, indem das Gleitstück 14 einen aus der Ebene der Führungsschiene 10 hervortretenden Bereich 35 mit zwie in Längsrichtung der Führungsschiene voneinander beabstandeten Abschlägen 36, 37 aufweist, zwischen die ein an der Verlängerung 27 der Handhabe 26 angeordneter Ansatz 38 derart eingreift, daß der Ansatz 38 bei einer Relativbewegung von Handhabe 26 zum Gleitstück 14 je nach Bewegungsrichtung jeweils mit einem der Anschläge 36, 37 zusammenwirkt. Hierzu sind auf dem Ansatz 38 noch je ein zu den Anschlägen 36, 37 weisender Zapfen 39 angeordnet, welche gleichzeitig auch zur Lagerung und Führung für zwischen dem Ansatz 38 und den Anschlägen 36, 37 jeweils angeordneten Federn 40 dienen. Somit ergibt sich eine schwimmende Lagerung und Anordnung der Handhabe 26 gegenüber dem Gleitstück 14, wobei der das Maß der möglichen Relativbewegung zwischen Handhabe 26 und Gleitstück 14 bestimmende Abstand zwischen dem Ansatz 38 bzw. den Zapfenenden 39 und den Anschlägen 36, 37 der erforderlichen Entriegelungsbewegung der Handhabe 26 entspricht.

Die erfindungsgemäße Vorrichtung arbeitet wie folgt:

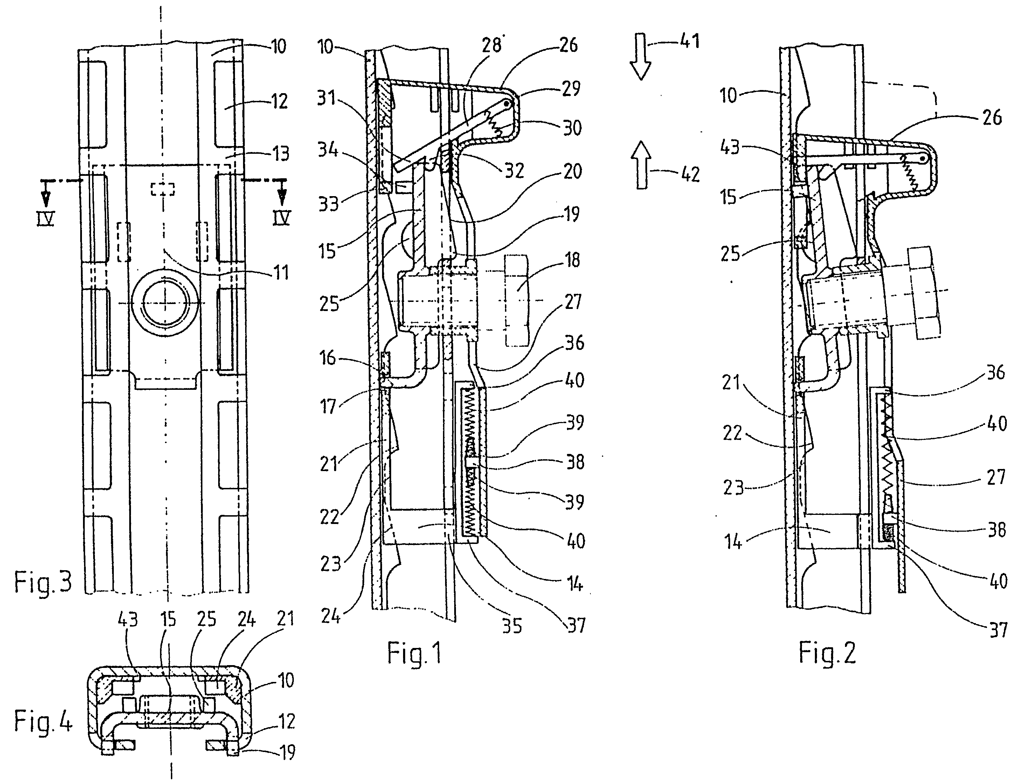

Bei der Darstellung in Figur 1 befindet sich das Raststück 15 in seiner verriegelten Position. Eine Verstellung des Beschlages nach unten wird zunächst eingeleitet durch einen Druck auf die Handhabe 26 in Richtung des Pfeils 41, der zu einer leichten Verschiebung der Handhabe 26 im Maß des Abstandes zwischen Zapfen 39 und Anschlag 37 erfolgt. Diese Verschiebung der Handhabe 26 führt zu einer Verschwenkung des Entriegelungshebels 28 um seinen Drehpunkt 29 nach oben, wodurch die Haltenase 32 das freie Ende des Raststücks 15 in Richtung auf den Boden der Führungsschiene 10 wegdrückt. Da die Relativbewegung der Handhabe 26 nach unten die Lasche 33 von dem Sperransatz 34 des Raststücks 15 wegbewegt hat, ist die Verschwenkung des Sperrstücks 15 ohne weiteres möglich. Das Einschwenken des Raststücks 15 führt zum Ausrasten der Verriegelungsorgane 19 aus den Ausnehmungen 12, wobei gleichzeitig der Nocken 25 sich in die Einsenkung 23 der Steuerkurve 21 legt. Weiterhin stützt sich dabei der Entriegelungshebel 28 mit seinem Riegelschenkel 31 auf einem der Steuerkurve 21 zugeordneten Anschlag 43 ab.

Diese entriegelte Position des Raststückes 15 vor der Abwärtsbewegung des Beschlages ist in Figur 2 dargestellt, wobei sich die nachfolgend geschilderten Bewegungsabläufe ohne weiteres aus einer Zusammenschau der Figuren 1 und 2 ergeben.

Sobald die Handhabe 26 bzw. ihre Verlängerung 27 bei der Verschiebung nach unten mit dem Ansatz 38 bzw. den Zapfen 39 auf den unteren Anschlag 37 des Gleitstückes 14 trifft, wird hierdurch bei weiterem Druck auf die Handhabe 26 das Gleitstück 14 nach unten bewegt und nimmt so über die Kopplung mit dem Raststück 15 über die Lasche 17 und die Stütznase 16 auch das Raststück 15 mit. Hierdurch läuft der Nocken 25 über die schräge Bahn 24 zur nachfolgenden Erhebung 23 der Steuerkurve 21 auf und wird so zwangsläufig wieder in die Verriegelungsposition mit der nachfolgenden Ausnehmung 12 der Führungsschiene 10 gebracht. Da mit der Abwärtsbewegung der Handhabe 26 gleichzeitig der Entriegelungshebel 28 weiter nach oben geschwenkt wird, kommt die Haltenase 32 vom Ende des Raststückes 15 frei, wodurch dieses sich wieder. in die Verriegelungsposition einschwenken kann. Sobald der Nocken 25 die Erhebung 22 der Steuerkurve 21 überlaufen hat, ist die Verriegelungsposition gemäß Figur 1 wieder erreicht, wobei die vordere Endlage des Raststückes 15 dann erreicht ist, wenn dessen Schräge 20 auf die Unterkante des oberen zugeordneten Abschnittes 13 der Führungsschiene 10 trifft.

Beim Loslassen der Handhabe 26 nach Erreichen der Verriegelungsposition drückt die gespannte Feder 40 zwischen dem Anschlag 37 und dem Zapfen 39 die Handhabe 26 wieder nach oben, wodurch die Zugfeder 30 gleichzeitig den Entriegelungshebel 28 in dessen Ausgangsposition zurückbewegt.

Ist eine Verschiebung des Beschlages nach oben beabsichtigt, so wird hierzu Druck auf die Handhabe 26 in Richtung des Pfeils 42 ausgeübt, bis der Zapfen 39 der Handhabenverlängerung 27 auf den oberen Ansatz 36 des Gleitstückes 14 trifft. Durch die Relativbewegung zwischen Handhabe 26 und Gleitstück 14 ist die Schocksicherung in Form der zugeordneten Sperrlasche 33 und des Sperransatzes 34 aufgehoben. Indem nun bei weiterem Druck nach oben die Schrägen 20 des Raststückes 15 auf den zugeordneten Kanten der Abschnitte 13 der Führungsschiene 10 auflaufen, schwenkt das Raststück 15 selbsttätig nach innen und fällt in die nachfolgende Ausnehmung 12 der Führungsschiene 10 wieder ein. Wie nicht weiter dargestellt, kann diese Bewegung auch durch Federkraft unterstützt werden. Nach Erreichen der Endposition drückt die Feder 40 die Handhabe 26 wieder in ihre Ausgangsstellung zurück.

Während somit in der Bewegung nach unten nur eine Verstellung des Beschlages von Rastposition zu Rastposition möglich ist, wobei dazwischen die Handhabe jeweils ihre Ausgangsposition wieder einnehmen können muß, kann die Verschiebung nach oben über mehrere Rastpositionen hinweg erfolgen, wobei bei Zwischenverriegelungen das Raststück selbst aufgrund dessen formschlüssiger Führung wieder die zugeordnete Rastposition einnimmt. Selbstverständlich ist die Erfindung nicht auf die dargestellte Anordnung von Sperrstück und Steuerkurve beschränkt, vielmehr ist jede Steuerung des Gleitstückes bzw. Raststückes möglich, welche eine formschlüssige Verriegelung von Rastposition zu Rastposition herbeiführt.

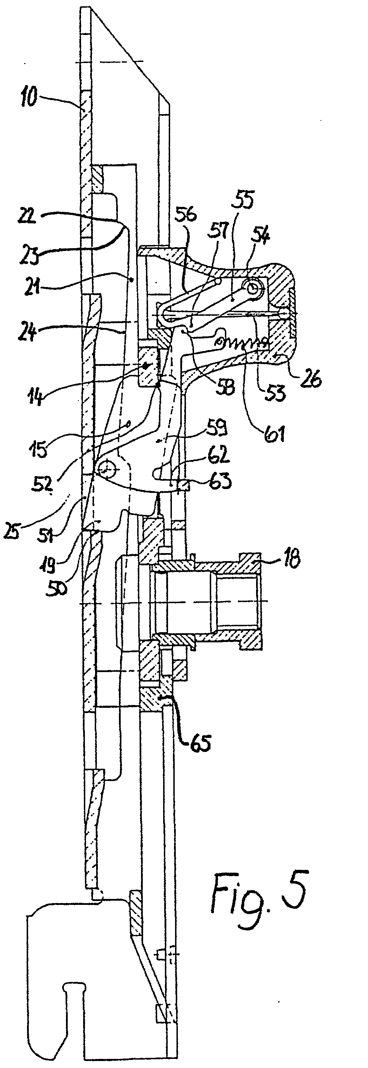

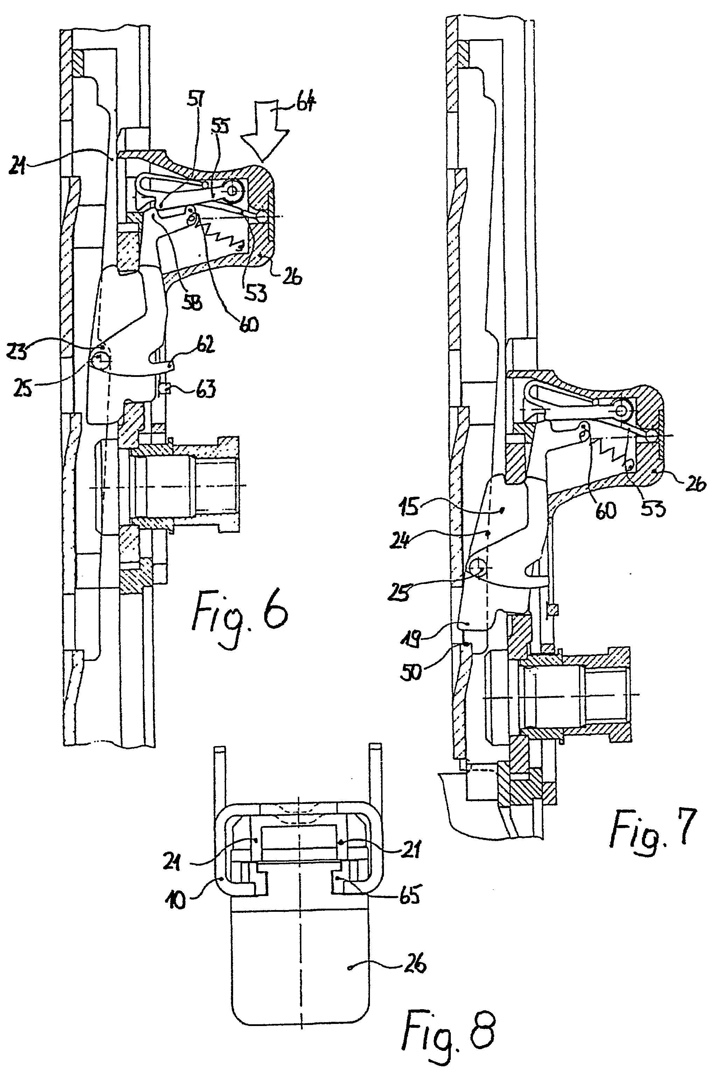

Bei dem in den Figuren 5 - 8 gezeigten Ausführungsbeispiel weist die C-förmige Führungsschiene 10 in ihrem Bodenbereich mehrere im gleichen oder ungleichen Abstand angeordnete Rastvorsprünge 50 auf, die unter Bildung von Ausnehmungen 51 aus dem Boden der Führungsschiene ausgeprägt sind, wobei die Ausnehmungen 51 jedoch keine besondere Funktion ausüben.

Das Raststück 15 ist in dem Gleitstück 14 nunmehr schwenkbeweglich um einen Schwenkpunkt 52 gelagert, wobei der Schwenkpunkt 52 der Lagerung des Raststückes an der Vorderseite des Gleitstückes 14 und oberhalb der am vorderen unteren Ende des Raststückes angeordneten Verriegelungskanten 19 gelegen ist. Das Raststück 15 weist ferner an seinen beiden Seiten walzenförmige Steuerstifte 25 auf, die mit den Erhebungen 22, Einsenkungen 23 und den dazwischen verlaufenden schrägen Verbindungsbahnen 24 der U-förmigen Steuerkurve 21 zusammenwirken. Die Einsenkungen 23 sind dabei im Verhältnis zu den Rastungen 50 derart angeordnet, daß bei verriegeltem Raststück 15 dessen Steuerstift 25 über der Einsenkung 23 der Steuerkurve 21 gelegen ist.

Zur Betätigung der Höhenverstellung ist in Übereinstimmung mit dem Ausführungsbeispiel gemäß den Figuren 1 - 4 an dem Gleitstück 14 eine Handhabe 26 angeordnet, die gegenüber dem Gleitstück 14 relativ beweglich ist, wobei eine Rückstellfeder 53 sich an dem Gleitstück 14 einerseits und an der Handhabe 26 andererseits abstützt. Im Inneren der Handhabe ist bei 54 an der Handhabe 26 ein Betätigungshebel 55 zur Betätigung des Sperrstückes 15 drehbar gelagert, der bei Schwenkbewegung unter Federspannung gegenüber der Handhabe 26 kommt, indem ein U-förmig umgebogener Fortsatz 56 des Betätigungshebels 55 sich innenseitig an der Handhabe 26 abstützt.

An seinem freien Vorderende weist der Betätigungshebel 55 eine Nase 57 auf, die mit einem Stützansatz 58 zusammenwirkt, welcher seinerseits an einer Hebelgestaltung 59 ausgebildet ist, die mit dem Raststück 15 im Sinne einer gleichlautenden Bewegung fest verbunden ist. Die Hebelgestaltung 59 weist ferner eine wegkragende Anschlagnase 60 auf, die mit der Unterseite des Betätigungshebels 55 in Anschlag kommt. Die Hebelgestaltung 59 ist über eine Zugfeder 61, und zwar im Bereich der Anschlagnase 60, federnd an die Handhabe 26 gekoppelt.

Zur Schocksicherung des Raststückes 15 gegen Querbeschleunigungen wiest die mit dem Raststück 15 verbundene Hebelgestaltung 59 einen Sperransatz 62 auf, vor dem in Verriegelungsposition des Raststückes (Figur 5) eine an der Handhabe 26 angeordnete Rippe 63 liegt. Eine Führungsanordnung 65 umschließt teilweise das Gleitstück 14 und nimmt die Handhabe 26 mit der Rückstellfeder 53 auf.

Die erfindungsgemäße Vorrichtung gemäß dem Ausführungsbeispiel der Figuren 5 - 8 arbeitet wie folgt:

Bei der Darstellung in Figur 5 befindet sich das Raststück 15 in seiner verriegelten Position. Eine Verstellung des Beschlages nach unten wird zunächst eingeleitet durch einen Druck auf die Handhabe 26 in Richtung des Pfeiles 64, der zu einer leichten Verschiebung der Handhabe 26 gegenüber dem Gleitstück 14 und dem gegenüber dem Gleitstück 14 festgelegten Raststück 15 führt. Hierdurch wird zunächst die Rippe 63 von dem Sperransatz 62 des Raststückes 15 wegbewegt, so daß dieses eine Schwenkbewegung von dem Boden der Führungsschiene 10 weggerichtet vornehmen kann. Durch die Relativbewegung zwischen Handhabe 26 und Gleitstück 14 wird bei gleichzeitiger Spannung der Rückstellfeder 53 der Betätigungshebel 55 verschwenkt, dessen vordere Nase 57 auf den Stützansatz 58 der Hebelgestaltung 59 drückt und somit die Verschwenkung des Betätigungshebels 55 in eine Schwenkbewegung der Hebelgestaltung 59 mit Raststück 15 umsetzt.

Da die Einsenkung 23 der Steuerkurve 21 in Verriegelungsposition des Sperrstückes 15 mit den Sperrgestaltungen 50 der Führungsschiene 10 über den walzenförmigen Steuerstiften 25 gelegen ist, tauchen bei Ausrastung des Sperrstückes 15 aus den Rastvorsprüngen 50 die Steuerstifte 25 in die Einsenkungen 23 der Steuerkurve 21 ein und laufen bei der Bewegung des Beschlages nach unten über die schrägen Verbindungsbahnen 24 auf die nächste Verriegelungsposition 50 zu. Durch dieses Ablaufen kommt es zu einer Erhöhung der Verschiebekraft, was zu einer weiteren Relativbewegung zwischen dem Raststück 15 mit Hebelgestaltung 59 und der Handhabe 26 führt. Hierdurch wird der Betätigungshebel 55 durch den von der Anschlagnase 60 auf ihn von unten her ausgeübten Druck aus seinem Eingriff mit dem Raststück 57, 58 gebracht, und in dieser Position verbleiben die beschriebenen Bauteile bis zum Erreichen der nächsten Verriegelungsposition, in welche das Raststück 15 über die Kurvenbahn 21 zwangsweise eingesteuert wird. Eine weitere Verstellung nach unten ist nun jedoch nicht mehr möglich, da der Spielraum für die erforderliche Relativbewegung ausgeschöpft ist, und somit muß zunächst die Handhabe 26 entlastet werden, wodurch die Rückstellfeder 53 die Bauteile wieder in die Neutrallage gemäß der Figur 5 zurückführt. Alsdann kann eine neue Verstellung nach unten in die nächste Verriegelungsposition mit gleichem Ablauf erfolgen.

Eine Verstellung des Beschlages nach oben wird durch Druck auf die Handhabe 26 in der gewünschten Richtung eingeleitet. Hierdurch wird die Rückstellfeder 53 nach oben vorgespannt, und es kommt zu einer Relativbewegung zwischen der Handhabe 26 und dem Raststück 15, wodurch wiederum der Schocksicherung 62, 63 aufgehoben und das Sperrstück 15 im Sinne einer Ausrastung freigegeben wird. Nunmehr kann die Höhenverstellvorrichtung nach oben in die nächst höhere Position gefahren werden, wobei das Raststück durch die Gleitbewegung seiner Steuerstifte 25 längs der Steuerkurve 21 selbsttätig aus- und einrastet. Das jeweilige Einrasten des Raststückes 15 wird dabei durch die Zugfeder 61 bewirkt, welche bei Vorspannung die Verriegelungsposition zu halten bemüht ist.

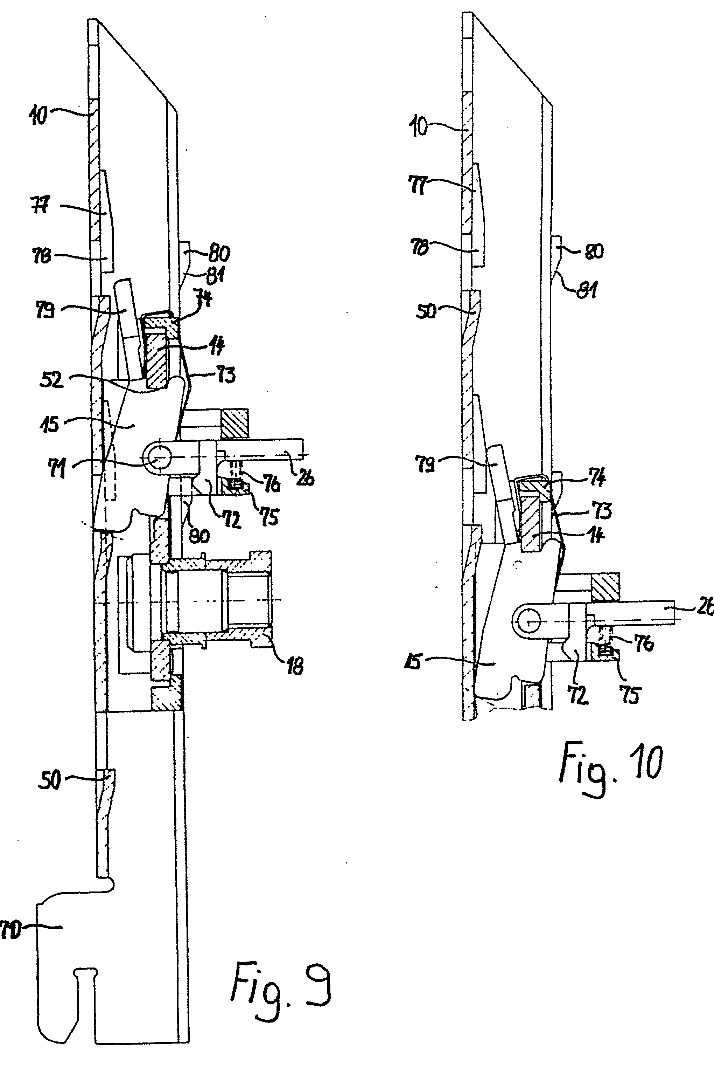

Das Ausführungsbeispiel gemäß den Figuren 9 und 10 stimmt hinsichtlich der Ausbildung der Führungsschiene 10 mit den Rasten 50 mit dem vorstehend beschriebenen Ausführungsbeispiel gemäß den Figuren 5 - 8 überein. In der Führungsschiene 10 ist das mittels eines Führungselementes 74 geführte Gleitstück 14 verschiebbar, wobei in dem Gleitstück das um einen Drehpunkt 52 bewegliche und unter der Wirkung einer Feder 73 stehende Raststück 15 eingreift.

Mittels eines Bolzens 71 ist an dem Raststück 15 eine Handhabe 26 beweglich angeschlagen, welche außerhalb der Führungsschiene 10 zwei seitlich des Führungsschlitzes angeordnete Nasen 72 aufweist, die auf der Oberfläche der Führungsschiene 10 aufliegen und bei Bewegung des Gleitstückes 14 mit dem Raststück 15 auf dieser gleiten.

Die Handhabe 26 ist gegen einen am Gleitstück 14 angebrachten Anschlag 75 bewegbar, welcher die Verschwenkung der Handhabe 26 begrenzt und gleichzeitig als Widerlager für eine auf die Handhabe 26 einwirkende Rückstellfeder 76 dient.

Zur Zwangssteuerung des Raststückes 15 ist auch bei dem vorliegenden Ausführungsbeispiel am Boden der Führungsschiene 10 die Steuerkurve 21 angeordnet, auf welcher das Raststück 15 mit einer daran angebrachten Verlängerung 79 derart läuft, daß es durch die in der Steuerkurve 21 ausgebildeten Erhebungen 23 jeweils in eine Raste 50 zwangseingesteuert wird.

Soll nun der Höhenversteller aus der in Figur 9 dargestellten verriegelten Position in eine andere Stellung verbracht werden, so wird die Handhabe 26 nach unten verschwenkt, wobei auf der Oberfläche der Führungsschiene 10 den Rasten 50 gegenüberliegend Erhebungen 80 aufgebracht sind und gleichzeitig die Abstützungsnasen 72 der Handhabe 26 mit einem der Höhe der auf der Führungsschiene 10 ausgebildeten Erhebungen 80 entsprechenden Abstand sur Oberfläche der Führungsschiene 10 angeordnet sind.

Mit einer derartigen Gestaltung ist sichergestellt, daß eine Umsetzung der Schwenkbewegung der Handhabe 26 nur in den Rastpositionen des Raststückes 15 erfolgen kann, weil aufgrund der gewählten Anordnungen der Erhebungen 80 auf der Oberfläche der Führungsschiene 10 eine Abstützung der Handhabe 26 nur an den Raststellen 50 für das Raststück 15 möglich ist, wohingegen ein Verschwenken der Handhabe 26 in Zwischenstellungen des Sperrstückes 15 mangels einer Abstützungsmöglichkeit für die Nasen 72 ohne Wirkung bleibt, wobei wegen der Begrenzung des Schwenkweges der Handhabe 26 durch den Anschlag 75 die Nasen 72 in Zwischenstellungen des Sperrstückes 15 keinen Auflagerkontakt zur Führungsschiene 10 erhalten können. Zur Erleichterung der Verstellbewegung sind die Erhebungen 80 mit Ablaufschrägen 81 versehen.

Wie nicht weiter dargestellt, können die Erhebungen 80 auf der Oberfläche der Führungsschiene 10 auch dadurch ausgebildet werden, daß an den entsprechenden Stellen Vertiefungen an der Führungsschiene 10 vorgesehen sind, wobei die Abstützung der Nasen 72 dann an den stehengebliebenen Materialerhebungen erfolgt.

Durch die Abstützung der Nasen 72 auf den Erhebungen 80 der Führungsschiene 10 wird aufgrund der voneinander beabstandeten Abstützungen an den Nasen 72 einerseits und der Verbindung 71 zwischen Handhabe 26 und Raststück 15 andererseits über den so gebildeten Hebelarm das Raststück 15 entgegen der auf es einwirkenden Kraft der Feder 73 aus der Rastung 50 herausbewegt. Danach kann das Gleitstück 14 mit dem daran verankerten Beschlag in der Führungsschiene 10 in eine andere Höhenlage verschoben werden, wobei die Feder 73 das Raststück 15 jeweils in die nächste Raste 50 einrasten läßt.

Wie nicht weiter dargestellt, können die Nasen 72 beispielsweise auch durch eine sich auf dem Boden der Führungsschiene 10 abstützende Verlängerung der Handhabe 26 ersetzt sein, so daß die Abstützung bei der Hebelverschwenkung am Boden der Führungsschiene 10 erfolgt. Sofern hier gewährleistet ist, daß die Abstützung sowie die Verbindung der Handhabe 26 mit dem Sperrstück 15 voneinander beabstandet sind, ergeben sich wiederum die gleichen Hebelverhältnisse wie beschrieben.

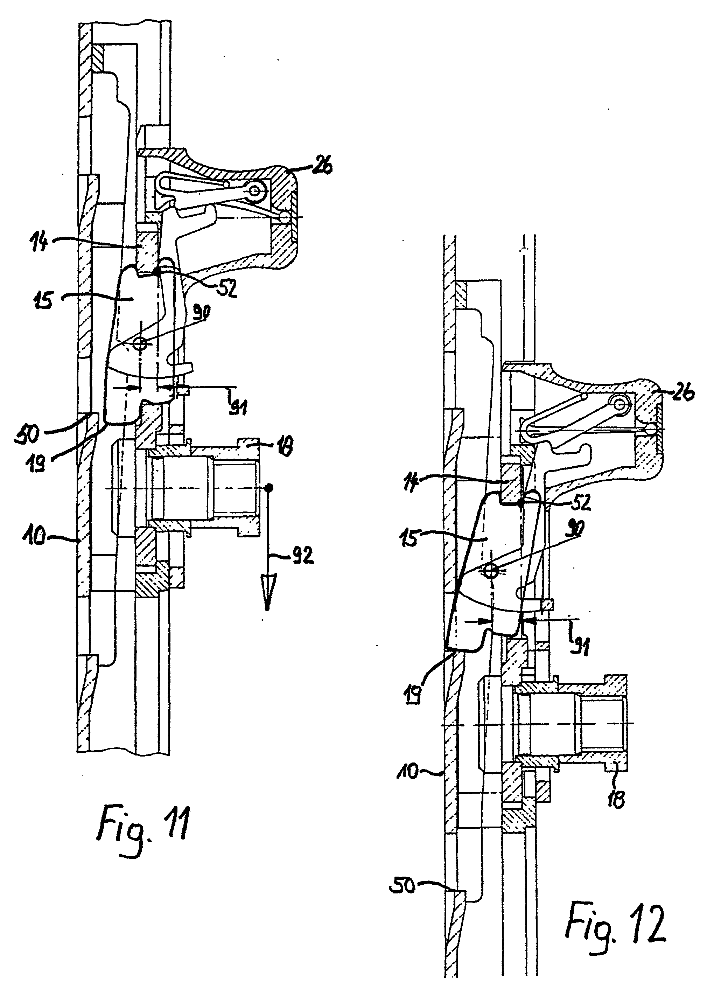

Wie schließlich den Figuren 11 und 12 zu entnehmen ist, kann die Zwangssteuerung des Rasthebels 15 durch eine besondere Anordnung seines Schwerpunktes bzw. des Drehpunktes im Verhältnis zum Gleitstück 14 derart verbessert bzw. verwirklicht werden, daß sich ein beschleunigungssensitives Verhalten des Rasthebels 15 bei plötzlich auftretenden Beschleunigungen ergibt. Dies ist im einzelnen dargestellt anhand des Ausführungsbeispieles, welches zu den Figuren 5 - 8 schon beschrieben ist. Wie dort zu entnehmen ist, ist das Raststück in dem Drehpunkt 52 am Gleitstück 14 gelagert; das Raststück 15 ist jedoch seiner Masse nach so ausgebildet und angeordnet, daß sein Schwerpunkt 90 in einem solchen Abstand zwischen dem Drehpunkt 52 und der Rastkante 19 angeordnet ist, daß der sich so ergebende Hebelarm 91 bei Einleitung einer Beschleunigung nach unten in das Gleitstück 14 für ein Drehmoment in Richtung auf die Rasten 50 der Führungsschiene 10 sorgt.

In der entriegelten Stellung gemäß Figur 11 ist der Hebelarm 91 in der unbelasteten Stellung des Gleitstückes 14 bzw. des Raststückes 15 dargestellt, in welcher das Gleitstück 14 in der Führungsschiene 10 frei verschiebbar ist. Kommt es nun zu einer Beschleunigung in Richtung des Pfeils 92 nach unten, so wirkt diese Beschleunigung zunächst auf das Gleitstück 14 und über den Drehpunkt 52 auf das Raststück 15, welches aufgrund des Hebelarmes 91 in Eingriff mit der nächsten Raste der Führungsschiene 10 verschwenkt wird. Die Verriegelungsstellung ist in Figur 12 dargestellt, bei welcher der wirksame Hebelarm 91 zwischen dem Schwerpunkt 90 und dem Drehpunkt 52 des Raststückes 15 und folglich das schließende Drehmoment am größten ist.

**Patentansprüche**

1. Vorrichtung zur Höhenverstellung des oberen Umlenk- oder Befestigungsbeschlages für den Schultergurt eines Sicherheitsgurtsystems insbesondere in Kraftfahrzeugen, bestehend aus einer an einem Fahrzeugaufbauteil (Karosserie) angebrachten Riegelvorrichtung mit einer Führungsschiene (10) und mit darin angeordneten Rastausnehmungen (12), in welche ein zugeordnetes Raststück (15) einer Rasteinrichtung eingreift, welches in einem im Führungsschienenprofil längsbeweglichen und mit einer Handhabe (26) gekoppelten Gleitstück (14) schwenkbeweglich zwischen einer Rast- und einer Verschiebestellung gelagert ist, dadurch gekennzeichnet, daß eine Vorrichtung (21) zur Herbeiführung einer formschlüssigen Zwangsverriegelung der Rasteinrichtung (Raststück 15, Gleitstück 14) mit der Führungsschiene (10) bei jeder Verstellung des Beschlages vorgesehen ist.

2. Vorrichtung nach Anspruch 1, dadurch gekennzeichnet, daß die Vorrichtung als eine in der Führungsschiene (10) angeordnete Steuerkurve (21) zur formschlüssigen Zwangsverriegelung des Raststücks (15) mit jeder der bei Verstellung des Beschlages nacheinander zu passierenden Raststellen (12, 50) ausgebildet ist.

3. Vorrichtung nach Anspruch 2, dadurch gekennzeichnet, daß die Steuerkurve (21) aus einer Abfolge von Erhebungen (23) und Einsenkungen (22) besteht, wobei die Einsenkungen (22) in Verriegelungsstellung des Raststücks (15) zur Aufnahme eines am Raststück angeordneten Steuernockens (25) eingerichtet sind.

4. Vorrichtung nach Anspruch 3, dadurch gekennzeichnet, daß die Erhebungen (23) der Steuerkurve (21) im Verhältnis zu dem Raststück (15) und dessen Nocken (25) derart angeordnet und in ihrer Höhe so bemessen sind, daß das Raststück (15) beim Anfahren jeder Erhebung (23) in seine Verriegelung mit den Ausnehmungen (12) der Führungsschiene (10) gesteuert wird.

5. Vorrichtung nach einem der Ansprüche 1 - 4, dadurch gekennzeichnet, daß das Raststück (15) in die Ebene der Führungsschiene (10) eintretende Verriegelungsvorsprünge (19) aufweist, welche die Ausnehmungen (12) mit einer Schräge (20) durchsetzen.

6. Vorrichtung nach einem der Ansprüche 1 - 5, dadurch gekennzeichnet, daß das Raststück (15) an seinem unteren Ende über einen Stützansatz (16) in einer Lasche (17) des Gleitstücks (14) gelagert ist und an seinem freien Ende mit einem Entriegelungshebel (28) zusammenwirkt, der gegen die Wirkung einer Feder (30) schwenkbar in der Handhabe (26) gelagert ist.

7. Vorrichtung nach Anspruch 6, dadurch gekennzeichnet, daß der Entriegelungshebel (28) bei Verschiebung der Handhabe (26) nach unten über einen der Steuerkurve (21) zugeordneten Anschlag (43) geschwenkt wird und vor Erreichen der nächsten Verriegelungsposition das freie Ende des Raststücks (14) freigibt.

8. Vorrichtung nach einem der Ansprüche 1 - 7, dadurch gekennzeichnet, daß das Gleitstück (14) aus der Ebene der Führungsschiene (10 hervortretende und mit einer Verlängerung (27) der Handhabe (26) zusammenwirkende in Längsrichtung der Führungsschiene (10) voneinander beabstandete Anschläge (36, 37) aufweist, zwischen die ein Ansatz (38) der Handhabenverlängerung (27) hineinreicht.

9. Vorrichtung nach Anspruch 8, dadurch gekennzeichnet, daß in Verriegelungsstellung des Beschlages der Ansatz (38) der Handhabe (26) zwischen den Anschlägen (36, 37) des Gleitstückes (14) eine Mittelstellung einnimmt, wobei zwischen dem Ansatz (38) und den Anschlägen (36, 37) je eine Feder (40) angeordnet ist.

10. Vorrichtung nach Anspruch 8, dadurch gekennzeichnet, daß am Ansatz (38) der Handhabe (26) in Richtung auf die Anschläge (36, 37) des Gleitstückes (14) je ein Zapfen (39) angeordnet ist, wobei der Abstand zwischen Zapfenende (39) und den Anschlägen (36, 37) der zur Entriegelung des Sperrstücks (14) erforderlichen Relativbewegung zwischen Handhabe (26) und Gleitstück (14) entspricht.

11. Vorrichtung nach einem der Ansprüche 1 - 10, dadurch gekennzeichnet, daß das Raststück (15) zum Zweck der Schocksicherung einen Sperransatz (34) aufweist, der in der Verriegelungsstellung vor einer Sperrlasche (33) der Handhabe (26) liegt und daß bei Bewegung der Handhabe (26) aus der Verriegelungsstellung aufgrund der Relativbewegung zwischen Raststück (15) und Handhabe (26) der Sperransatz (34) von der Sperrlasche (33) freikommt.

12. Vorrichtung nach einem der Ansprüche 1 - 11, dadurch gekennzeichnet, daß in symmetrischer Anordnung in den bodenseitigen Ecken der C-förmigen Führungsschiene (10) zwei Steuerkurven (21) angeordnet sind, denen zwei am Raststück (15) angebrachte Nocken (25) zugeordnet sind.

13. Vorrichtung nach einem der Ansprüche 1 - 12, dadurch gekennzeichnet, daß die Steuerkurven (21) längs der aufstehenden Seitenflächen der Führungsschiene (10) angeordnet sind und daß das Raststück (15) entsprechend zugeordnete seitliche Steuernocken aufweist.

14. Vorrichtung nach einem der Ansprüche 1 - 13, dadurch gekennzeichnet, daß die Steuerkurven (21) mit Führungsnocken am Gleitstück (14) zusammenwirken, wobei die Zwangssteuerung des Raststückes (15) über das Gleitstück (14) erfolgt.

15. Vorrichtung nach Anspruch 2 und 3, dadurch gekennzeichnet, daß das mit im Boden der Führungsschiene (10) ausgeprägten Rastvorsprüngen (50) zusammenwirkende Raststück (15) über einen an der Handhabe (26) abgestützten Betätigungshebel (55) schwenkbar ist, dessen Bewegung durch eine Relativbewegung zwischen Gleitstück (14) und daran angeordnetem Raststück (15) und Handhabe (26) gesteuert wird.

16. Vorrichtung nach Anspruch 15, dadurch gekennzeichnet, daß der Betätigungshebel (55) an der Handhabe (26) drehbar gelagert (54) ist und gegenüber dieser federnd (56) abgestützt ist.

17. Vorrichtung nach Anspruch 15, dadurch gekennzeichnet, daß die Handhabe (26) mit dem Gleitstück (14) durch eine im Inneren der Handhabe (26) angeordnete und sich unmittelbar am Gleitstück (14) und an der Handhabe (26) abstützende Rückstellfeder (53) verkoppelt ist.

18. Vorrichtung nach einem der Ansprüche 15 - 17, dadurch gekennzeichnet, daß das im Gleitstück (14) gelagerte, lastaufnehmende Raststück (15) mit einer Hebelgestaltung (59) verbunden ist, die bis in die Handhabe (26) reicht und dort über einen Stützansatz (58) mit dem Betätigungshebel (55) zusammenwirkt.

19. Vorrichtung nach Anspruch 18, dadurch gekennzeichnet, daß die Hebelgestaltung (59) eine Anschlagnase (60) aufweist, die mit dem Betätigungshebel (55) zusammenwirkt, wobei zwischen Anschlagnase (60) und Handhabe (26) eine Zugfeder (61) angeordnet ist.

20. Vorrichtung nach einem der Ansprüche 15 - 19, dadurch gekennzeichnet, daß die Handhabe (26) eine Rippe (63) und das Raststück (15) bzw. die Hebelgestaltung (53) einen Sperransatz (62) aufweisen, die in verriegelter Position der Höhenverstellvorrichtung in Querrichtung der Führungsschiene ebenengleich einander zugeordnet sind.

21. Vorrichtung nach einem der Ansprüche 1 - 20, dadurch gekennzeichnet, daß die Handhabe (26) sich in der Entriegelungsstellung an der Führungsschiene (10) abstützt und die Abstützungsgestaltungen (72) der Handhabe (26) und deren Verbindung mit dem Raststück (15) oder dem Gleitstück (14) voneinander beabstandet sind.

22. Vorrichtung nach Anspruch 21, dadurch gekennzeichnet, daß die Handhabe (26) beidseitig des in der Führungsschiene (10) ausgebildeten Führungsschlitzes Nasen (72) aufweist, welche sich bei der Hebelverschwenkung auf der Oberfläche der Führungsschiene (10) abstützen.

23. Vorrichtung nach Anspruch 21 oder 22, dadurch gekennzeichnet, daß die Handhabe (26) eine Verlängerung aufweist, welche sich bei der Hebelverschwenkung am Boden der Führungsschiene (10) abstützt.

24. Vorrichtung nach einem der Ansprüche 21 - 23, dadurch gekennzeichnet, daß die Führungsschiene (10) sowie die Handhabe (26) im Bereich der Rasten (50) der Führungsschiene (10) solche einander zugeordneten Gestaltungen (72, 80) aufweisen, daß eine Abstützung der Handhabe (36) an der Führungsschiene (10) nur an den vorgesehenen Stellen erfolgen kann.

25. Vorrichtung nach Anspruch 24, dadurch gekennzeichnet, daß die Abstützungsnasen (72) an der Handhabe (26) mit Abstand zur Oberfläche der Führungsschiene (10) angeordnet sind.

26. Vorrichtung nach Anspruch 24 und 25, dadurch gekennzeichnet, daß den Rasten (50) der Führungsschiene (10) gegenüberliegend die Oberfläche der Führungsschiene (10) Erhebungen (80) aufweist, deren größte Höhe dem Abstand der Abstützungsnasen (72) der Handhabe (26) zur Führungsschienenoberfläche entspricht.

27. Vorrichtung nach Anspruch 26, dadurch gekennzeichnet, daß die Erhebungen (80) in Verstellrichtung nach unten mit Ablaufschrägen (81) versehen sind.

28. Vorrichtung nach einem der Ansprüche 21 - 27, dadurch gekennzeichnet, daß das Gleitstück (14) einen die Schwenkbewegung der Handhabe (26) begrenzenden Anschlag (75) aufweist.

29. Vorrichtung nach einem der Ansprüche 1 - 28, dadurch gekennzeichnet, daß das Raststück (15) einen mit einem solchen Hebelarm (91) zu seinem Drehpunkt (52) am Gleitstück (14) angeordneten Massenschwerpunkt (90) aufweist, daß sich bei abwärts (92) gerichteten Beschleunigungskräften ein das Raststück (15) in die Schließstellung mit den Rasten (50) bewegendes Drehmoment ergibt.

## Claims

1. Apparatus for the level adjustment of the upper deflection or fixation fitting for the shoulder belt of a safety belt system, in particular in motor vehicles, comprising a latch device fitted to a body portion of a vehicle, including a guide rail (10) having ratchet rebates (12) provided therein engaged by an associated ratchet member (15) of a ratchet means mounted pivotally between a locking and a sliding position in a slider member (14) which is longitudinally movable in the profile of the guide rail and is coupled to an operating means (26), characterised in that a means (21) is provided for establishing positive mechanical interlocking of the ratchet means (slider member 14, ratchet member 15) with the guide rail (10) whenever the fitting is readjusted.

2. Apparatus according to claim 1, characterised in that the means takes the form of a cam profile (21) provided in the guide rail (10) for the positive mechanical interlocking of the ratchet member (15) with each of the ratchet positions (12, 50) successively passed during readjustment of the fitting.

3. Apparatus according to claim 2, characterised in that the cam profile (21) comprises a succession of elevations (23) and recesses (22), the recesses (22) in the locking position of the ratchet member (15) being adapted to accommodate a control projection (25) provided on the ratchet member.

4. Apparatus according to claim 3, characterised in that the elevations (23) of the cam profile (21) are provided in relation to the ratchet member (15) and its projection (25), and their heights being so dimensioned, that the ratchet member (15) whenever it rises onto any one of the elevations (23) is guided into its interlock condition with the recesses (12) of the guide rail (10).

5. Apparatus according to any one of claims 1 to 4, characterised in that the ratchet member (15) comprises locking projections (19) projecting into the plane of the guide rail (10) and which by means of an incline (20) pass through the recesses (12).

6. Apparatus according to any one of claims 1 to 5, characterised in that the ratchet member (15) at its lower end is mounted in a lug (17) of the slider member (14) by way of a support projection (16) and at its free end coacts with an unlocking lever (28) mounted in the operating means (26) pivotally against the bias of a spring (30).

7. Apparatus according to claim 6, characterised in that the unlocking lever (28) is pivoted over a stop formation (43) associated with the cam profile (21) to a downward direction on displacement of the operating means (26) and prior to reaching the next following interlocking position releases the free end of the ratchet member (14).

8. Apparatus according to any one of claims 1 to 7, characterised in that the slider member (14) comprises stop formations (36, 37) mutually spaced apart in the longitudinal direction of the guide rail (10) projecting from the plane of the guide rail (10) and coating with an extension (27) of the operating means (26), between which a projection (38) of the operating means extension (27) projects.

9. Apparatus according to claim 8, characterised in that in the interlocking position of the fitting the projection (38) of the operating means (26) adopts an intermediate position between the stop formations (36, 37) of the slider member (14), a spring (40) being provided between the projection (38) and the respective stop formations (36, 37).

10. Apparatus according to claim 8, characterised in that for each of the stop formations (36, 37) of the slider member (14) and directed towards these a pin (39) is provided on the projection (38) of the operating means (26), the spacing between the end of such pin (39) and the stop formations (36, 37) corresponding to the relative movement between the operating means (26) and the slider member (14) required for unlocking the ratchet member (14).

11. Apparatus according to any one of claims 1 to 10, characterised in that the ratchet member (15) comprises a locking projection (34) for shock protection which in the interlocking position rests against a latch member (33) of the operating means (26) and that on movement of the operating means (26) from the interlocking position the ratchet protection (34) is released from the latch member (33) due to the relative movement between the ratchet member (15) and the operating means (26).

12. Apparatus according to any one of claims 1 to 11, characterised in that two cam profiles (21) are provided symmetrically in the bottom end corners of the C-shaped guide rail (10) and are associated with two cams (25) provided on the ratchet member (15).

13. Apparatus according to any one of claims 1 to 12, caracterised in that the cam profiles (21) are provided alongside the upright side faces of the guide rail (10) and that the ratchet member (15) comprises correspondingly associated lateral control cams.

14. Apparatus according to any one of claims 1 to 13, characterised in that the cam profiles (21) coact with guide cams on the slider member (14), the enforced movement control of the ratchet member (15) being brought about by the slider member (14).

15. Apparatus according claims 2 and 3, characterised in that the ratchet member (15) coacting with ratchet projections (50) embossed into the bottom of the guide rail (10) is adapted to be pivoted by means of an operating lever (55) supported on the operating means (26) and the movement of which is controlled by a relative movement between the slider member (14) and the ratchet member (15) and operating means (26) fitted thereto.

16. Apparatus according to claim 15, characterised in that the operating lever (55) is pivotally mounted (54) on the operating means (26) and is spring-loaded (56) in relation thereto.

17. Apparatus according to claim 15, characterised in that the operating means (26) is coupled to the slider member (14) by way of a return spring (53) provided inside the operating means (26) and directly bearing against the slider member (14) and the operating means (26).

18. Apparatus according to any one of claims 15 to 17, characterised in that the load absorbing ratchet member (15) mounted in the slider member (14) is connected to a lever device (59) which extends into the operating means (26) and there by way of a support projection (58) coacts with the operating lever (55).

19. Apparatus according to claim 18, characterised in that the lever device (59) comprises a stop projection (60) which coacts with the operating lever (55), a tensile spring (61) being provided between the stop projection (60) and the operating means (26).

20. Apparatus according to any one of claims 15 to 19, characterised in that the operating means (26) comprises a rib (63) and the ratchet member (15) or respectively the lever device (53) comprises a locking projection (62) which in the locked position of the level adjustment device are mutually associated with one another in a common plane in the transverse direction of the guide rail.

21. Apparatus according to any one of claims 1 to 20, characterised in that the operating means (26) in the unlocking position finds support against the guide rail (10) and the support formations (72) of the operating means (26) and its connection to the locking member (15) or the slider member (14) are mutually spaced apart.

22. Apparatus according to claim 21, characterised in that the operating means (26) comprises projections (72) on both sides of the guide slot provided in the guide rail (10) which when the lever means is pivoted, finds support on the surface of the guide rail (10).

23. Apparatus according to claim 21 or 22, characterised in that the operating means (26) comprises an extension which when the lever means is pivoted is supported on the bottom of the guide rail (10).

24. Apparatus according to any one of claims 21 to 23, characterised in that the guide rail (10) as well as the operating means (26) in the region of the ratchet formations (50) of the guide rail (10) comprise such mutually associated formations (72, 80) that a support of the operating means (26) against the guide rail (10) can take place only at the positions provided for that purpose.

25. Apparatus according to claim 24, characterised in that the support projections (72) are provided on the operating means (26) at a distance from the surface of the guide rail (10).

26. Apparatus according to claims 24 and 25, characterised in that the surface of the guide rail (10) comprises elevations (80) opposite to the ratchet formations of the guide rails and the maximum height of which corresponds to the spacing of the support projections (72) of the operating means (26) from the guide rail surface.

27. Apparatus according to claim 26, characterised in that the elevations (80) are provided with downwardly directed sliding declines (31) in the adjustement direction.

28. Apparatus according to any one of claims 21 to 27, characterised in that the slider member (14) comprises a stop member (75) which limits the pivoting movement of the operating means (26).

29. Apparatus according to any one of claims 1 to 28, characterised in that the ratchet member (15) comprises a centre of gravity (90) provided with such a lever arm (91) in relation to its pivoting point (52) on a slider member (14) that in the event of downwardly directed (92) accelerating forces a torque results which turns the ratchet member (15) into the interlocking position with the ratchet formations (50).

## Revendications

1. Dispositif de réglage en hauteur de la ferrure supérieure de renvou ou de fixation de la ceinture d'épaulier d'un système de ceinture de sécurité, en particulier pour véhicules automobiles, constitué d'un dispositif de verrouillage placé sur la carrosserie d'un véhicule, comportant une glissière (10) avec des évidements d'arrêt (12) disposés dans celle-ci, dans lesquels s'engage une pièce d'arrêt (15) d'un dispositif d'arrêt, laquelle pièce d'arrêt est montée de manière à pouvoir pivoter entre une position d'arrêt et une position de déplacement, dans un coulisseau (14) se déplaçant longitudinalement dans le profilé de la glissière et accouplé à une poignée (26), caractérisé en ce qu'on prévoit un dispositif (21) pour provoquer un verrouillage forcé par complémentarité de forme entre le dispositif d'arrêt (coulisseau 14, pièce d'arrêt 15) et la glissière (10) pour chaque position de la ferrure.

2. Dispositif selon la revendication 1, caractérisé en ce que ce dispositif est une came de commande (21) disposée dans la glissière (10), pour le verrouillage forcé, par complémentarité de forme de la pièce d'arrêt (15) avec chacun des points d'arrêt (12, 50) que l'on doit passer l'un après l'autre, lorsque l'on déplace la ferrure.

3. Dispositif selon la revendication 2, caractérisé en ce que la came de commande (21) est constituée d'une succession de bossages (23) et de creux (22), les creux (22) étant conçus, en position de verrouillage de la pièce d'arrêt (15), pour recevoir une came de commande (25) placée sur la pièce d'arrêt.

4. Dispositif selon la revendication 3, caractérisé en ce que les bossages (23) de la came de commande (21) sont disposés, par rapport à la pièce d'arrêt (15) et à sa came (25), et sont dimensionnés en hauteur de telle sorte que la pièce d'arrêt (15) est commandée pour se verrouiller avec les évidements (12) de la glissière (10), au passage de chaque bossage (23).

5. Dispositif selon l'une des revendications 1 à 4, caractérisé en ce que la pièce d'arrêt (15) présente des saillies de verrouillage (19) pénétrant dans le plan de la glissière (30) et qui traversent les évidements (12) par une surface oblique (20).

6. Dispositif selon l'une des revendications 1 à 5, caractérisé en ce que la pièce d'arrêt (15) est montée, à son extrémité inférieure, dans une patte (17) du coulisseau (14), par l'intermédiaire d'un talon d'appuy (16), et coopère, à son extrémité libre, avec un levier de déverrouillage (28) qui est monté pivotant dans la poignée (26), à l'encontre de l'action d'un ressort (30).

7. Dispositif selon la revendication 6, caractérisé en ce que, lorsqu'on déplace la poignée (26) vers le bas, le levier de déverrouillage (28) pivote par une butée (43) associée à la came (21) et libère l'extrémité libre de la pièce d'arrêt (14), avant que ne soit atteinte la position de verrouillage suivante.

8. Dispositif selon l'une des revendications 1 à 7, caractérisé en ce que le coulisseau (14) présente des butées (36, 37) espacées l'une de l'autre dans la direction longitudinale de la glissière (10), ressortant du plan de la glissière (10) et coopérant avec un prolongement (27) de la poignée: (26), entre lesquelles s'étend un appendice (38) du prolongement (27) de la poignée.

9. Dispositif selon la revendication 8, caractérisé en ce que dans la position de verrouillage de la ferrure, l'appendice (38) de la poignée (26) prend une position centrale, entre les butées (36, 37) du coulisseau (14), un ressort (40) étant placé entre l'appendice (38) et les butées (36; 37).

10. Dispositif selon la revendication 8, caractérisé en ce qu'un tenon (39) est placé sur l'appendice (38) de la poignée; (26), en direction des butées (36, 37) du coulisseau (14), la distance séparant l'extrémité du tenon (39) et les butées (36, 37) correspondant au déplacement relatif nécessaire pour déverrouiller la pièce de verrouillage (14), entre la poignée (26) et le coulisseau (14).

11. Dispositif selon l'une des revendications 1 à 10, caractérisé en ce que la pièce d'arrêt (15) présente, pour assurer une protection contre les chocs, un talon de blocage (34) qui, dans la position de verrouillage, se situe devant une patte de blocage (33) de la poignée (26) et en ce que, lorsque la poignée (26) quitte la position de verrouillage, le talon de blocage (34) est libéré de la patte de blocage (33), par suite du déplacement relatif entre la pièce d'arrêt (15) et la poignée (26).

12. Dispositif selon l'une des revendications 1 à 11, caractérisé en ce qu'on place deux cames de commande (21) dans une disposition symétrique, dans les angles côté fond de la glissière (10) en C, dont deux sont associés à des cames (25) placées sur la pièce d'arrêt (15).

13. Dispositif selon l'une des revendications 1 à 12, caractérisé en ce que les cames de commande (21) sont placées le long des faces latérales verticales de la glissière (10) et en ce que la pièce d'arrêt (15) comporte des cames de commande latérales associées correspondantes.

14. Dispositif selon l'une des revendications 1 à 13, caractérisé en ce que les cames de commande (21) coopèrent avec des cames de guidage du coulisseau (14), la commande forcée de la pièce d'arrêt (15) se faisant par le coulisseau (14).

15. Dispositif selon les revendications 2 et 3, caractérisé en ce que la pièce d'arrêt (15) coopérant avec des saillies d'arrêt (50) pratiquées dans le fond de la glissière (10), peut pivoter par l'intermédiaire d'un levier d'actionnement (55) prenant appui sur la poignée (26), le déplacement de ce levier étant commandé par un déplacement relatif entre le coulisseau (14) et la pièce d'arrêt (15) placée sur celui-ci, et la poignée (26).

16. Dispositif selon la revendication 15, caractérisé en ce que le levier d'actionnement (55) est monté (54) tournant sur la poignée (26) et est soutenu élastiquement (56) par rapport à celle-ci.

17. Dispositif selon la revendication 15, caractérisé en ce que la poignée (26) est accouplée au coulisseau (14) par un ressort de rappel (53) placé à l'intérieur de la poignée (26) et prenant appui directement sur le coulisseau (14) et sur la poignée (26).

18. Dispositif selon l'une des revendications 15 à 17, caractérisé en ce que la pièce d'arrêt (15) absorbant la charge, montée dans le coulisseau (14) est reliée à un organe à levier (59) qui s'étend jusque dans la poignée (26) et qui coopère, en cet endroit, avec le levier d'actionnement (55), par l'intermédiaire d'un talon d'appui (58).

19. Dispositif selon la revendication 18, caractérisé en ce que l'organe à levier (59) comporte un nez de butée (60) qui coopère avec le levier d'actionnement (55), un ressort de traction (61) étant placé entre le nez de butée (60) et la poignée (26).

20. Dispositif selon l'une des revendications 15 à 19, caractérisé en ce que la poignée (26) comporte une nervure (63) et la pièce d'arrêt (15) ou l'organe à levier (53) comporte un talon de blocage (62) qui, en position verrouillée du dispositif de réglage en hauteur, sont associés l'un à l'autre dans un même plan dans la direction transversale de la glissière.

21. Dispositif selon l'une des revendications 1 à 20, caractérisé en ce que, dans la position de déverrouillage, la poignée (26) prend appui contre la glissière (10) et en ce que les organes d'appui (72) de la poignée (26) et sa liaison avec la pièce d'arrêt (15) ou avec le coulisseau (14), sont espacés les uns des autres.

22. Dispositif selon la revendication 21, caractérisé en ce que la poignée (26) présente, de part et d'autre de la fente de guidage formée dans la glissière (10), des nez (72) qui prennent appui sur la surface de la glissière (10) pendant le pivotement du levier.

23. Dispositif selon la revendication 21 ou 22, caractérisé en ce que la poignée (26) présente un prolongement qui prend appui sur le fond de la glissière (10), pendant le pivotement du levier.

24. Dispositif selon l'une des revendications 21 à 23, caractérisé en ce que la glissière (10) ainsi que la poignée (26) présentent des organes (72, 80) dans la zone des crans d'arrêt (50) de la glissière (10), qui sont associés les uns aux autres de manière que la poignée (26) ne puisse prendre appui sur la glissière (10) qu'aux point prévus.

25. Dispositif selon la revendication 24, caractérisé en ce que les nez d'appui (72) sont placés sur la poignée (26) à une certaine distance de la surface de la glissière (10).

26. Dispositif selon les revendications 24 et 25, caractérisé en ce que la surface de la glissière (10) présente en face des crans d'arrêt (50) de la glissière (10), des bossages (80) dont la hauteur maximum correspond à la distance séparant les nez d'appui (72) de la poignée (26) et la surface de la glissière.

27. Dispositif selon la revendication 26, caractérisé en ce que les bossages (80) sont pourvus de surfaces obliques descendantes, dans la direction de déplacement vers le bas.

28. Dispositif selon l'une des revendications 21 à 27, caractérisé en ce que le coulisseau (14) comporte une butée (75) limitant le pivotement de la poignée (26).

29. Dispositif selon l'une des revendications 1 à 28, caractérisé en ce que la pièce d'arrêt (15) présente un centre de gravité (90) situé sur le coulisseau (14), par rapport à son point de rotation (52), avec un bras de levier (91) tel que, dans le cas de forces d'accélérations dirigées vers le bas (92), il en résulte un couple de rotation déplaçant la pièce d'arrêt (15) dans la position de fermeture avec les crans d'arrêt (50).

Fig.1

Fig.2

Fig.3

Fig.4

Fig. 5

**Fig. 6**

**Fig. 7**

**Fig. 8**

Fig. 9

Fig. 10

Fig. 11

Fig. 12